# FASCICULE DE BREVET EUROPEEN

(11) **EP 0 657 736 B1**
(45) Date de publication et mention de la délivrance du brevet: **12.09.2001**
(21) Numéro de dépôt: 94402799.4
(22) Date de dépôt: 06.12.1994
(51) Int. Cl.: G01N 29/02

(54) **Utilisation d'un dispositif de mesure acoustique de la composition d'un liquide binaire**
Verwendung einer Vorrichtung zur akustischen Messung der Zusammensetzung einer Zweikomponentenflüssigkeitsmischung
Use of an apparatus for acoustically measuring the composition of a binary liquid

(30) Priorité: 07.12.1993 FR 9314657
(43) Date de publication de la demande: 14.06.1995
(73) Titulaire: MARWAL SYSTEMS, F-92000 Nanterre (FR)
(72) Inventeur: Denneulin, Denis, F-75004 Paris (FR); Ching, Gil, F-06110 Le Cannet (FR)
(74) Mandataire: Schrimpf, Robert

(56) Documents cités:
- WO-A-92/03724
- DE-A- 1 623 753
- NL-A- 8 001 444
- US-A- 4 255 964
- US-A- 4 852 396

## Description

La présente invention concerne le domaine de l'utilisation des dispositifs de mesure de la composition d'un liquide.

La présente invention trouve notamment, mais non exclusivement, application dans la mesure de la composition d'un carburant, en particulier dans la mesure du taux d'additif dans celui-ci.

La mesure de la composition d'un carburant, notamment du taux d'additif dans un carburant, peut être utile à diverses fins.

En particulier la mesure du taux d'additif dans un carburant peut être exploitée pour contrôler in situ la quantité d'additif introduite dans le réservoir de carburant.

On sait que les carburants utilisés de nos jours pour l'alimentation de véhicule automobile comprennent généralement par exemple des additifs formés de composés organo-métalliques servant de catalyseur de combustion pour les particules de suie. Ces additifs organo-métalliques ont pour but de réduire la température d'inflammation de ces particules.

Généralement, ces additifs sont mélangés au carburant lors du processus industriel d'obtention du carburant, dans les usines pétrolières productrices.

Toutefois, sauf à multiplier les variétés de carburant distribuées, l'adjonction de ces additifs dans les usines n'offre aucune souplesse d'adaptation au choix des utilisateurs, ou à la motorisation.

Comme décrit dans les documents FR-A-2668203, EP-A-269228, DE-A-3836602 et US-A-4621593, on a proposé des systèmes conçus pour mesurer la quantité de carburant introduite dans un réservoir, et injecter directement dans celui-ci une quantité d'additif proportionnelle à la quantité mesurée de carburant. Ces systèmes proposés requièrent des moyens de calcul puissants pour définir la quantité d'additif à injecter. Par ailleurs, en cas d'erreur ou de dérive dans le calcul, ils conduisent à un taux erroné d'additif fortement préjudiciable.

Le document US-A-4255964 décrit un dispositif de contrôle de fluide comprenant une chambre de mesure adaptée pour recevoir le fluide à contrôler, une chambre étalon contenant un liquide étalon, des moyens d'application d'onde acoustique aux chambres précitées, et de détection de la fréquence de résonance de l'onde acoustique dans ces chambres.

Le document US-A-4852396 décrit un dispositif de détection de la composition d'un mélange liquide dans un processus industriel. Le dispositif comprend une cuve adaptée pour recevoir successivement chacune des composantes pures du liquide, puis un mélange de celui-ci, des moyens adaptés pour appliquer des ondes acoustiques auxdites composantes et au mélange de liquide et des moyens adaptés pour déterminer la composition du mélange sur la base des temps de propagation mesurés.

Par rapport à l'état de la technique, la présente invention propose l'utilisation des moyens définis en revendication 1 annexée, laquelle est délimitée sous forme de préambule et de partie caractérisante par rapport au document US-A-4 852 396.

D'autres caractéristiques, buts et avantages de la présente invention apparaîtront à la lecture de la description détaillée qui va suivre, et en regard des dessins annexés sur lesquels :
- la figure 1 représente une vue schématique en coupe verticale d'un dispositif de mesure utilisé dans la présente invention,
- les figures 2 et 3 annexées représentent, selon des vues en coupe verticale, deux variantes de réalisation utilisées dans la présente invention,
- la figure 4 représente la vitesse d'une onde acoustique mesurée dans un carburant de véhicule automobile, en fonction de sa température, et ce pour différents taux de ferrocène, et
- la figure 5 représente schématiquement un réservoir de véhicule automobile équipé d'un dispositif de mesure utilisé dans la présente invention.

On va par la suite décrire les modes de réalisation préférentiels de la présente invention dans le cadre d'une application au carburant du véhicule automobile. Toutefois, ce descriptif ne doit pas être considéré comme limitatif.

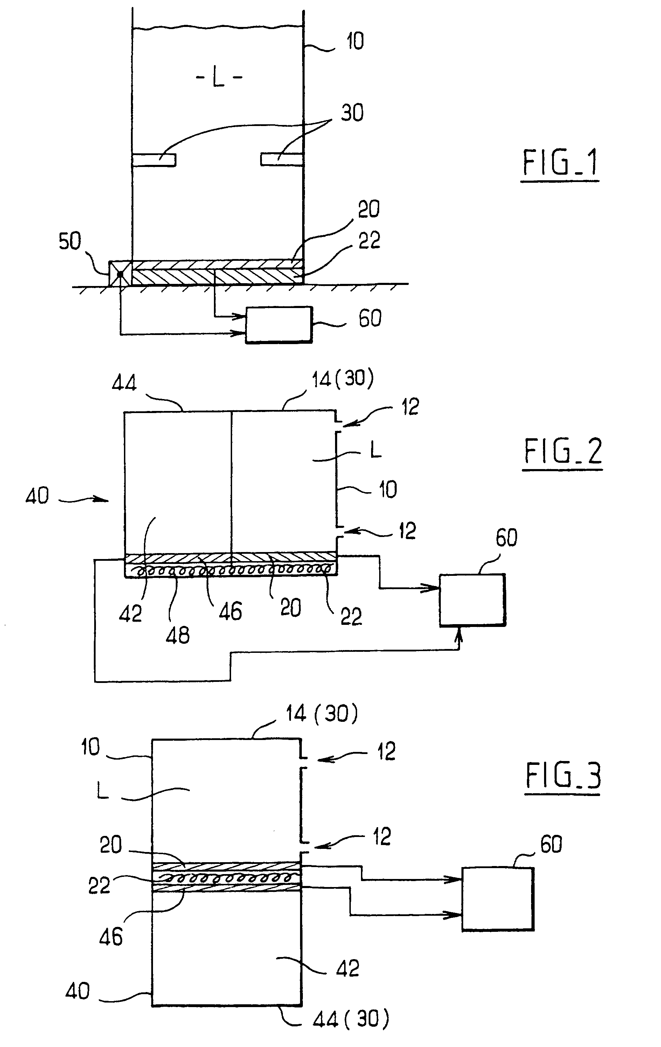

On aperçoit sur la figure 1 annexée un boîtier 10 conçu pour recevoir le liquide L dont on veut utiliser la composition pour mesurer la teneur en additif.

En pratique le boîtier 10 peut être formé par le réservoir de carburant lui-même placé dans le véhicule automobile.

De préférence cependant le boîtier 10 est formé d'une chambre de plus faible volume placée à l'intérieur du réservoir de carburant du véhicule, ou encore à l'extérieur de ce réservoir de carburant, sous réserve que ledit boîtier 10 communique avec le volume interne du réservoir, de sorte que le carburant L placé dans le boîtier 10 soit toujours le même que le carburant placé dans le réservoir.

Le système comprend des moyens 20 aptes à appliquer une onde acoustique au liquide L. Plus précisément, ces moyens 20 sont associés à des moyens 60 aptes à mesurer la célérité de l'onde acoustique se propageant dans le liquide L.

On peut pour cela prévoir, d'une part des moyens émetteurs d'onde acoustique, d'autre part des moyens récepteurs d'onde acoustique couplés par l'intermédiaire du liquide L et situés à une distance respective connue. Il suffit alors de mesurer, au niveau des moyens 60 reliés à la fois aux moyens émetteurs et aux moyens récepteurs, le temps de propagation entre les moyens émetteurs et les moyens récepteurs, sur la distance connue, pour connaître la célérité de l'onde acoustique dans le liquide L.

Toutefois, selon le mode de réalisation préférentiel représenté sur les figures annexées, les moyens émetteurs et les moyens récepteurs de l'onde acoustique sont confondus et sont placés en regard d'un réflecteur 30 placé dans le boîtier 10 à une distance connue de ces moyens émetteurs/récepteurs 20.

Ainsi, en mesurant le temps d'aller et retour des ondes acoustiques réfléchies sur les réflecteurs 30, la célérité des ondes acoustiques dans le liquide L peut être obtenue aisément.

On a en effet C = 2h/T,
relation dans laquelle :
C représente la célérité des ondes acoutiques dans le liquide L,
h représente la distance séparant le réflecteur 30 des moyens émetteurs/récepteurs 20, et
T représente le temps mesuré entre l'émission initiale d'une onde acoustique et la réception de l'écho correspondant sur les moyens émetteurs/récepteurs 20.

De préférence, les moyens émetteurs/récepteurs 20 sont formés d'une cellule piézo-électrique. Par ailleurs, cette cellule piézo-électrique 20 est de préférence placée à la base du boîtier 10.

De façon connue en soi, la cellule piézo-électrique 20 repose, sur sa face opposée au liquide L, sur un revêtement absorbeur 22 qui évite la propagation d'ondes acoustiques parasites à l'opposé du liquide L.

Selon la variante de réalisation représenté sur la figure 1, les moyens réflecteurs 30 sont supportés à hauteur connue h sur la paroi interne du boîtier 10.

Comme on le verra à l'examen des figures 2 et 3, ces moyens réflecteurs 30 pourraient être prévus au sommet du boîtier 10.

Connaissant la fonction reliant la célérité des ondes acoustiques à la nature du carburant L, en particulier au taux d'additif de celui-ci, on peut à l'aide de moyens électroniques simples 60, à base de moyens de calcul, ou encore de tables contenant des valeurs prémémorisées, obtenir la composition du carburant, de préférence le taux d'additif contenu dans celui-ci.

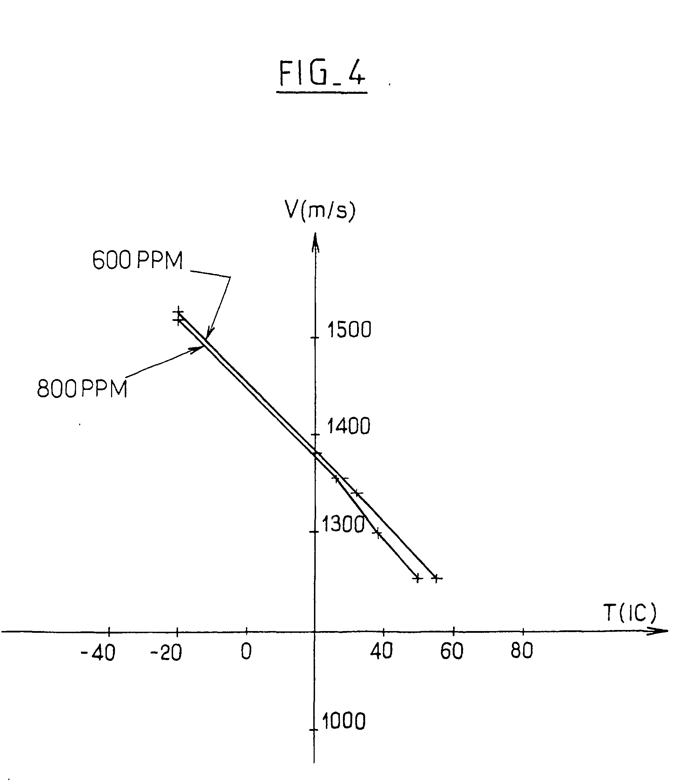

On a représenté sur la figure 4 annexée, des courbes illustrant la célérité d'une onde acoustique dans un carburant, en fonction de la température de celui-ci, et ce pour deux taux d'additifs de ferrocène, respectivement à 600PPM et 800PPM.

Comme on le voit à l'examen de la figure 4, la célérité d'une onde acoustique dans le carburant dépend fortement de la température.

Pour cette raison, dans le cadre de la présente invention, les moyens conçus pour déduire la composition de liquide, de la célérité mesurée dans celui-ci, sont en outre adaptés pour tenir compte de la température du liquide.

Cette température peut être mesurée à l'aide d'une sonde 50 reliée aux moyens 60 comme schématisé sur la figure 1.

L'information de température obtenue peut être utilisée par des moyens de calcul intégrés aux moyens 60 pour affiner le résultat de la mesure de composition.

En variante l'information de température obtenue peut être utilisée pour une sélection parmi plusieurs tables prémémorisées intégrées à ces moyens 60, ou encore pour une sélection de valeur dans une telle table prémémorisée intégrée à ces moyens 60.

La présente invention trouve notamment application à la mesure du taux de ferrocène dans un carburant de type gas oil.

Selon d'autres variantes qui sont représentées sur les figures 2 et 3, on peut s'affranchir du paramètre température en utilisant non pas une sonde de température 50, mais une chambre étalon contenant un liquide de composition connue adjacente au boîtier 10 pour être placée à la même température que celui-ci.

On a représenté sur la figure 2 une variante de réalisation d'un dispositif conforme à la présente invention comprenant un boîtier 10 conçu pour recevoir le liquide L dont on veut mesurer la composition, communiquant avec le réservoir de carburant par l'intermédiaire d'ouvertures 12, et dont la paroi supérieure 14 sert de réflecteur à l'égard d'ondes acoustiques. Des moyens émetteurs/récepteurs piézo-résistifs 20 sont placés à la base de ce boîtier 10, sur un revêtement absorbeur 22. Par ailleurs, le dispositif représenté sur la figure 2 comprend une chambre étalon additionnelle 40 accolée latéralement au boîtier 10 pour être placée à la même température que celui-ci. La chambre étalon 40 est remplie d'un liquide 42 de composition connue. Le sommet 44 de la chambre 40 sert de réflecteur à l'égard d'ondes acoustiques. La chambre 40 est munie à sa base de moyens émetteurs/récepteurs 46 d'ondes acoustiques placés sur un revêtement absorbeur 48. On comprend que la mesure du temps de propagation aller/retour d'une onde acoustique entre les moyens émetteurs/récepteurs 46 et le sommet 44 de la chambre 40, dans le liquide 42 de composition connue, permet d'obtenir directement une information représentative de la température du liquide. On peut le cas échéant synchroniser les moyens émetteurs/récepteurs 20 et 46.

Dans ce cas, il suffit de prendre en compte, d'une part le temps de propagation aller retour dans le liquide étalon 42, d'autre part le déphasage entre la réception des échos sur les moyens émetteurs/récepteurs 20 et 46 pour obtenir directement la composition du carburant, en éliminant totalement l'influence de la température sur la mesure.

Bien entendu, comme indiqué précédemment pour la chambre de mesure 10, la chambre étalon 40 peut comprendre non pas des moyens émetteurs/récepteurs réunis localement, mais des moyens émetteurs/récepteurs distincts séparés entre eux d'une distance connue.

Bien entendu, pour éviter tout mélange du liquide 42 de composition connue avec le carburant du réservoir, la chambre étalon 44 doit être étanche.

On a représenté sur la figure 3 une autre variante de réalisation selon laquelle les deux chambres 10 de mesure et 40 étalon ne sont pas accolées latéralement, mais superposées. En pratique, la chambre de mesure 10 peut être située au-dessus de la chambre étalon 40 ou l'inverse.

Dans le cadre d'une disposition superposée comme illustré sur la figure 3, on peut utiliser des moyens émetteurs/récepteurs piézo-électriques communs aux deux chambres 10, 40, situés entre celles-ci, ou encore utiliser des moyens émetteurs/récepteurs spécifiques 20, 46 situés respectivement de part et d'autre d'un revêtement absorbeur 22 comme schématisé sur la figure 3.

En pratique, la hauteur des chambres de mesure 10 et étalon 40 peut être de l'ordre du cm.

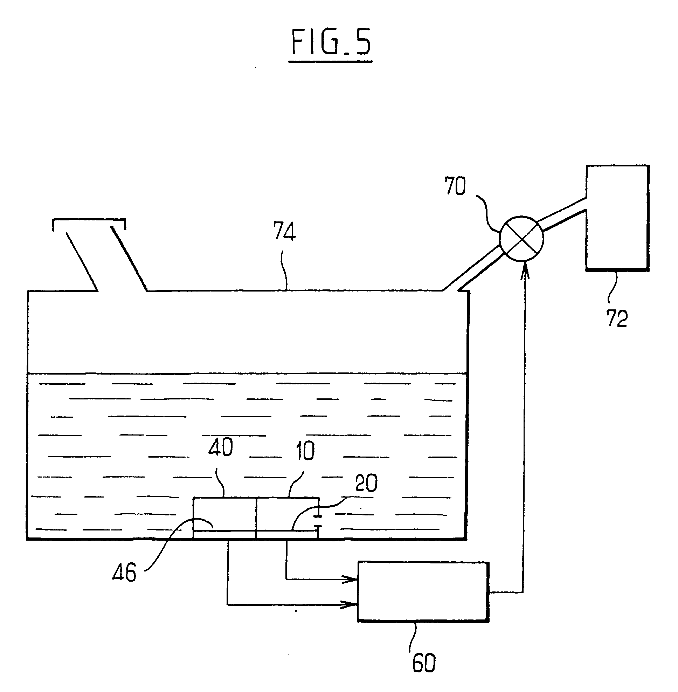

Le système de mesure et de détermination de la composition d'un carburant, précédemment décrit, peut être couplé à des moyens d'injection d'additif dans un réservoir de carburant, l'injection d'additif dans le carburant étant opérée jusqu'à obtention du taux d'additif requis. Pour cela, comme représenté sur la figure 5, il suffit de commander à l'ouverture une vanne 70 reliant un réservoir d'additif 72 au réservoir de carburant 74, tant que le taux d'additif mesuré dans le carburant reste inférieur à la consigne.

Dans le cadre d'une variante de réalisation comprenant une chambre étalon 40 adjacente à la chambre de mesure 10, la vanne 70 peut être ouverte tant que le taux d'additif mesuré dans ladite chambre de mesure 10 n'a pas atteint le taux d'additif mesuré dans la chambre étalon 40 située à la même température, c'est à dire en fait tant que le temps aller/retour de l'onde ultrasonore (ou célérité) dans la chambre de mesure 10 n'est pas identique à celui (ou célérité) mesuré pour la chambre étalon 40. La commande de la vanne 70 doit cependant être pulsée et temporisée pour permettre une homogénéisation du carburant dans le réservoir et dans le boitier 10 au moment de la mesure.

## Revendications

1. Utilisation d'un dispositif de mesure de la composition d'un liquide contenu dans un réservoir, comprenant :
- un boitier (10) conçu pour recevoir le liquide dont on veut mesurer la composition,
- des moyens (20) aptes à appliquer une onde acoustique au liquide (L), et
- des moyens (60) aptes à mesurer la célérité de l'onde acoustique se propageant dans le liquide et à déduire la composition du liquide à partir de la célérité mesurée, **caractérisée par** le fait que l'utilisation concerne la mesure de la teneur en additif d'un carburant contenu dans un réservoir de véhicule automobile.

2. Utilisation selon la revendication 1, **caractérisée par** le fait qu'elle met en oeuvre des moyens (20) d'application d'une onde acoustique qui comprennent un moyen émetteur et un moyen récepteur séparés d'une distance connue.

3. Utilisation selon l'une des revendications 1 ou 2, **caractérisée par** le fait qu'elle met en oeuvre des moyens émetteurs et des moyens récepteurs (20) d'une onde acoustique qui sont distincts et séparés d'une distance connue.

4. Utilisation selon l'une des revendications 1 ou 2, **caractérisée par** le fait qu'elle met en oeuvre des moyens (30) réflecteurs d'une onde acoustique situés à une distance connue de moyens émetteurs/récepteurs d'onde acoustique (20).

5. Utilisation selon la revendication 4, **caractérisée par** le fait qu'elle met en oeuvre des moyens réflecteurs (30) formés par le sommet du boitier (10).

6. Utilisation selon la revendication 4, **caractérisée par** le fait qu'elle met en oeuvre des moyens réflecteurs (30) placés dans le boîtier (10) à distance choisie des moyens émetteurs/récepteurs (20).

7. Utilisation selon l'une des revendications 1 à 6, carctérisée par le fait qu'elle met en oeuvre des moyens (60) de mesure ou de déduction de la teneur en additif du carburant qui exploitent par ailleurs la température du liquide (L).

8. Utilisation selon l'une des revendications 1 à 7, **caractérisée par** le fait qu'elle met en oeuvre en outre au moins une chambre étalon (40) contenant un liquide de composition connue (42) et conçue pour être placée à la même température que le boîtier de mesure (10) et des moyens (46) adaptés pour appliquer une onde acoustique au liquide de composition connue et mesurer le temps de propagation dans ce liquide pour en déduire une information sur la température du carburant.

9. Utilisation selon la revendication 7, **caractérisée par** le fait qu'elle met en oeuvre en outre une sonde de température (50).

10. Utilisation selon l'une des revendications 1 à 9, **caractérisée par** le fait que le boitier (10) est formé du réservoir de carburant du véhicule automobile.

11. Utilisation selon l'une des revendications 1 à 9, **caractérisée par** le fait que le boîtier (10) est formé d'une chambre auxiliaire de plus faible dimension que le réservoir, placée à l'intérieur ou à l'extérieur de celui-ci et communiquant avec ledit réservoir.

12. Utilisation selon l'une des revendications 1 à 11, **caractérisée par** le fait que les moyens émetteurs/récepteurs d'ondes acoustiques sont formées de moyens piézo-électriques (20, 46).

13. Utilisation selon la revendication 8, **caractérisée par** le fait que la chambre étalon (40) est étanche.

14. Utilisation selon l'une des revendications 1 à 13 prise en combinaison avec la revendication 8, **caractérisée par** le fait que la chambre étalon (40) et le boitier de mesure (10) sont juxtaposés latéralement.

15. Utilisation selon l'une des revendications 1 à 13, **caractérisée par** le fait que la chambre de mesure (10) et la chambre étalon (40) sont superposées verticalement.

16. Utilisation selon l'une des revendications 1 à 15 prise en combinaison avec la revendication 8, **caractérisée par** le fait que les moyens (60) de mesure et de déduction exploitent le temps aller/retour de l'onde acoustique dans le liquide de composition connue (42) d'une part, et le déphasage entre les échos reçus sur les moyens émetteurs/récepteurs associés respectivement à la chambre de mesure (10) et à la chambre étalon (40) d'autre part.

17. Utilisation selon l'une des revendications 1 à 16, pour mesurer le taux de ferrocène dans du gaz oil.

18. Utilisation selon l'une des revendications 1 à 17, **caractérisée par** le fait qu'elle met en oeuvre en outre un réservoir d'additif (72) relié au réservoir de carburant (74) d'un véhicule automobile et des moyens de contrôle d'écoulement (70) intercalés entre le réservoir d'additif (72) et le réservoir de carburant (74), lesquels moyens de contrôle (70) sont pilotés par le signal issu des moyens (60) aptes à mesurer la célérité de l'onde acoustique et à déduire la composition du liquide, pour piloter l'ouverture des moyens de contrôle (70) afin de définir un taux d'additif mesuré dans le carburant correspondant à une consigne.

19. Utilisation selon la revendication 18, **caractérisée par** le fait que les moyens de contrôle d'écoulement (70) sont maintenus ouverts tant que la célérité mesurée dans le boitier (10) n'est pas identique à la célérité mesurée dans une chambre étalon (40) contenant un liquide de composition connue.

20. Utilisation selon l'une des revendications 1 à 19, **caractérisée par** le fait que la hauteur du boîtier (10) est de l'ordre de 1cm.

## Patentansprüche

1. Verwendung einer Vorrichtung zur Messung der Zusammensetzung einer in einem Behälter enthaltenen Flüssigkeit, mit:
- einem Gehäuse (10), welches dafür bestimmt ist, die Flüssigkeit aufzunehmen, deren Zusammensetzung gemessen werden soll,
- Vorrichtungen (20), welche dafür eingerichtet sind, eine akustische Welle in die Flüssigkeit (L) auszusenden, und
- Vorrichtungen (60), welche dafür eingerichtet sind, die Fortpflanzungsgeschwindigkeit der akustischen Welle, die sich in der Flüssigkeit ausbreitet, zu messen und aus der gemessenen Fortpflanzungsgeschwindigkeit die Zusammensetzung der Flüssigkeit abzuleiten,
**dadurch gekennzeichnet, daß** die Verwendung die Messung des Zusatzstoffgehaltes eines in einem Behälter des Kraftfahrzeuges enthaltenen Kraftstoffes betrifft.

2. Verwendung gemäß Anspruch 1, **dadurch gekennzeichnet, daß** sie Vorrichtungen (20) zum Einsetzen einer akustischen Welle benutzt, welche eine Aussendevorrichtung und eine Empfangsvorrichtung umfassen, die mit einem bekannten Abstand voneinander getrennt sind.

3. Verwendung gemäß einem der Ansprüche 1 oder 2, **dadurch gekennzeichnet, daß** sie Aussendevorrichtungen und Empfangsvorrichtungen (20) für eine akustische Welle einsetzt, welche unterschiedlich und mit einem bekannten Abstand voneinander getrennt sind.

4. Verwendung gemäß einem der Ansprüche 1 oder 2, **dadurch gekennzeichnet, daß** sie Vorrichtungen (30) zur Reflexion einer akustischen Welle einsetzt, welche mit einem bekannten Abstand von den Aussende-/Empfangsvorrichtungen für die akustische Welle (20) angeordnet sind.

5. Verwendung gemäß Anspruch 4, **dadurch gekennzeichnet, daß** sie Reflexionsvorrichtungen (30) einsetzt, welche von der Spitze des Gehäuses (10) gebildet sind.

6. Verwendung gemäß Anspruch 4, **dadurch gekennzeichnet, daß** sie Reflexionsvorrichtungen (30) einsetzt, welche in dem Gehäuse (10) mit einem gewählten Abstand von den Aussende/Empfangsvorrichtungen (20) angeordnet sind.

7. Verwendung gemäß einem der Ansprüche 1 bis 6, **dadurch gekennzeichnet, daß** sie Vorrichtungen (60) zur Messung oder Ableitung des Zusatzstoffgehaltes des Kraftstoffes einsetzt, welche außerdem die Temperatur der Flüssigkeit (L) auswerten.

8. Verwendung gemäß einem der Ansprüche 1 bis 7, **dadurch gekennzeichnet, daß** sie außerdem wenigstens eine Eichmaßkammer (40) einsetzt, welche eine Flüssigkeit mit bekannter Zusammensetzung (42) enthält, und welche dafür eingerichtet ist, auf die gleiche Temperatur eingestellt zu sein wie das Meßgehäuse (10), und sie Vorrichtungen (46) einsetzt, welche dafür eingerichtet sind, eine akustische Welle in die Flüssigkeit mit der bekannten Zusammensetzung auszusenden und die Fortpflanzungszeit in dieser Flüssigkeit zu messen, um daraus eine Information über die Temperatur des Kraftstoffes abzuleiten.

9. Verwendung gemäß Anspruch 7, **dadurch gekennzeichnet, daß** sie außerdem einen Temperaturfühler (50) einsetzt.

10. Verwendung gemäß einem der Ansprüche 1 bis 9, **dadurch gekennzeichnet, daß** das Gehäuse (10) aus dem Kraftstoffbehälter des Kraftfahrzeuges gebildet ist.

11. Verwendung gemäß einem der Ansprüche 1 bis 9, **dadurch gekennzeichnet, daß** das Gehäuse (10) aus einer Nebenkammer mit kleineren Abmessungen als der Behälter gebildet ist, welche im inneren oder äußeren Bereich von diesem angeordnet und mit dem Behälter verbunden ist.

12. Verwendung gemäß einem der Ansprüche 1 bis 11, **dadurch gekennzeichnet, daß** die Aussende-/Empfangsvorrichtungen für die akustischen Wellen aus piezo-elektrischen Vorrichtungen (20, 46) gebildet sind.

13. Verwendung gemäß Anspruch 8, **dadurch gekennzeichnet, daß** die Eichmaßkammer (40) dicht ausgebildet ist.

14. Verwendung gemäß einem der Ansprüche 1 bis 13 in Kombination mit Anspruch 8, **dadurch gekennzeichnet, daß** die Eichmaßkammer (40) und das Meßgehäuse (10) seitlich nebeneinander angeordnet sind.

15. Verwendung gemäß einem der Ansprüche 1 bis 13, **dadurch gekennzeichnet, daß** die Meßkammer (10) und die Eichmaßkammer (40) vertikal übereinander liegend angeordnet sind.

16. Verwendung gemäß einem der Ansprüche 1 bis 15 in Kombination mit Anspruch 8, **dadurch gekennzeichnet, daß** die Meß- und Ableitungsvorrichtungen (60) einerseits die Hin- und Rücklaufzeit der akustischen Welle in der Flüssigkeit mit bekannter Zusammensetzung (42) und andererseits die Phasendifferenz zwischen den Echos auswerten, die auf den Aussende/Empfangsvorrichtungen empfangen werden, welche jeweils mit der Meßkammer (10) und der Eichmaßkammer (40) verbunden sind.

17. Verwendung gemäß einem der Ansprüche 1 bis 16, um den Ferrocengehalt im Öldampf zu messen.

18. Verwendung gemäß einem der Ansprüche 1 bis 17, **dadurch gekennzeichnet, daß** sie außerdem einen Zusatzstoffbehälter (72), der mit dem Kraftstofftank (74) eines Kraftfahrzeuges verbunden ist, und Vorrichtungen zur Abfließsteruerung (70), welche zwischen dem Zusatzstoffbehälter (72) und dem Kraftstofftank (74) angeordnet sind, einsetzt, wobei die Steuervorrichtungen (70) von dem Signal ferngesteuert werden, das von den Vorrichtungen (60) ausgegeben wird, welche dafür eingerichtet sind, die Fortpflanzungsgeschwindigkeit der akustischen Welle zu messen und die Zusammensetzung der Flüssigkeit abzuleiten, um die Öffnung der Steuervorrichtungen (70) fernzusteuern, um einen in dem Kraftstoff gemessenen Zusatzstoffgehalt entsprechend einem Einstellwert zu definieren.

19. Verwendung gemäß Anspruch 18, **dadurch gekennzeichnet, daß** die Vorrichtungen zur Steuerung des Abfließens (70) offen gehalten werden, solange die in dem Gehäuse (10) gemessene Fortpflanzungsgeschwindigkeit nicht identisch mit der Fortpflanzungsgeschwindigkeit ist, die in der Eichmaßkammer (40) gemessen wird, welche eine Flüssigkeit mit bekannter Zusammensetzung enthält.

20. Verwendung gemäß einem der Ansprüche 1 bis 19, **dadurch gekennzeichnet, daß** die Höhe des Gehäuses (10) in der Größenordnung von 1 cm liegt.

## Claims

1. The use of a device for measuring the composition of a liquid contained in a tank, the device comprising:
· a housing (10) designed to receive the liquid whose composition is to be measured;
· means (20) suitable for applying a soundwave to the liquid (L); and
· means (60) suitable for measuring the speed of the soundwave propagating in the liquid and for deducing the composition of the liquid from the measured speed,
the use being **characterized by** the fact that it relates to measuring the additive content of a fuel contained in a motor vehicle tank.

2. The use of claim 1, **characterized by** the fact that it implements means (20) for applying a soundwave which comprise emitter means and receiver means spaced apart by a known distance.

3. The use of claim 1 or claim 2, **characterized by** the fact that it implements soundwave emitter means and receiver means (20) that are distinct and spaced apart by a known distance.

4. The use of claim 1 or claim 2, **characterized by** the fact that it implements soundwave reflector means (30) situated at a known distance from soundwave emitter/receiver means (20).

5. The use of claim 4, **characterized by** the fact that it implements reflector means (30) formed by the top of the housing (10).

6. The use of claim 4, **characterized by** the fact that it implements reflector means (30) placed inside the housing (10) at a selected distance from the emitter/receiver means (20).

7. The use of any one of claims 1 to 6, **characterized by** the fact that it implements means (60) for measuring or deducing the additive content of the fuel, which means also make use of the temperature of the liquid (L).

8. The use of any one of claims 1 to 7, **characterized by** the fact that it also implements at least one reference chamber (40) containing a liquid of known composition (42) and designed to be placed at the same temperature as the measurement housing (10), and means (46) adapted to apply a soundwave to the liquid of known composition and to measure the propagation time in said liquid to deduce therefrom information concerning the temperature of the fuel.

9. The use of claim 7, **characterized by** the fact that it further implements a temperature probe (50).

10. The use of any one of claims 1 to 9, **characterized by** the fact that the housing (10) is constituted by the fuel tank of the motor vehicle.

11. The use of any one of claims 1 to 9, **characterized by** the fact that the housing (10) is formed by an auxiliary chamber of smaller size than the tank, placed inside or outside the tank and in communication therewith.

12. The use of any one of claims 1 to 11, **characterized by** the fact that the soundwave emitter/receiver means are formed by piezoelectric means (20, 46).

13. The use of claim 8, **characterized by** the fact that the reference chamber (40) is sealed.

14. The use of any one of claims 1 to 13, in combination with claim 8, **characterized by** the fact that the reference chamber (40) and the measurement housing (10) are laterally juxtaposed.

15. The use of any one of claims 1 to 13, **characterized by** the fact that the measurement chamber (10) and the reference chamber (40) are vertically superposed.

16. The use of any one of claims 1 to 15, taken in combination with claim 8, **characterized by** the fact that the measurement means and the deduction means (60) make use of the go-and-return time of the soundwave in the liquid of known composition (42) and also of the phase difference between the echoes received by the emitter/receiver means associated respectively with the measurement chamber (10) and with the reference chamber (40).

17. The use of any one of claims 1 to 16 for measuring the ferrocene content in gas oil.

18. The use of any one of claims 1 to 17, **characterized by** the fact that it further implements an additive tank (72) connected to the fuel tank (74) of a motor vehicle, and flow control means (70) interposed between the additive tank (72) and the fuel tank (74), which control means (70) are responsive to the signal output by the means (60) suitable for measuring the propagation speed of the soundwave and for deducing the composition of the liquid therefrom to open the control means (70) in order to cause the measured additive content in the fuel to correspond to a reference.

19. The use of claim 18, **characterized by** the fact that the flow control means (70) are kept open so long as the propagation speed measured in the housing (10) is not identical to the propagation speed measured in the reference chamber (40) containing a liquid of known composition.

20. The use of any one of claims 1 to 19, **characterized by** the fact that the height of the housing (10) is of the order of 1 cm.
